# EUROPÄISCHE PATENTSCHRIFT

(11) **EP 1 247 605 B1**
(45) Veröffentlichungstag und Bekanntmachung des Hinweises auf die Patenterteilung: **08.10.2003**
(21) Anmeldenummer: 02004080.4
(22) Anmeldetag: 25.02.2002
(51) Int. Cl.: B23D 37/10

(54) **Innenräummaschine**
Internal surfaces broaching machine
Machine à brocher l'intérieur

(30) Priorität: 09.03.2001 DE 20104159 U
(43) Veröffentlichungstag der Anmeldung: 09.10.2002
(73) Patentinhaber: Gierth, Lothar, 58802 Balve (DE)
(72) Erfinder: Gierth, Lothar, 58802 Balve (DE)
(74) Vertreter: Schröter & Haverkamp

(56) Entgegenhaltungen:
- EP-A- 0 606 827
- EP-B- 0 594 103

## Beschreibung

Die Erfindung betrifft eine Innenräummaschine, bei der in einem Maschinengestell ein oberer Druckschlitten und ein unterer Ziehschlitten verfahrbar sind und zwischen diesen Schlitten ein Maschinentisch mit Aufnahmen für das oder die parallel zu bearbeitenden Werkstücke angeordnet ist, wobei das oder die den Maschinentisch durchsetzenden Räumwerkzeugen jeweils am Druckschlitten und am Ziehschlitten in Werkzeughaltem festsetzbar sind.

Aus der DE 42 35 145 A1 ist eine Senkrecht-Innenräummaschine bekannt, bei der in einem Maschinengestell ein oberer Druckschlitten mit einem beabstandeten unteren Ziehschlitten als gemeinsamer Räumschlitten über einen gemeinsamen Antrieb verfahrbar ist. Zwischen Druckschlitten und Ziehschlitten ist ein ortsfest angeordneter Maschinentisch vorgesehen, auf dem in entsprechenden Aufnahmen die zu bearbeitenden Werkstücke anzuordnen sind. Sowohl am Druckschlitten als auch am Ziehschlitten sind Werkzeughalter vorgesehen, in denen die Schäfte bzw. die Enden der Räumwerkzeuge, sogenannte Räumnadeln, verriegelt werden können. Je nach Festsetzungsart der vertikal angeordneten Räumwerkzeuge, also entweder am Druckschlitten oder am Ziehschlitten, werden solche Innenräumschienen entweder als Druckräummaschine oder als Ziehräummaschine eingesetzt.

In der Regel werden mit solchen bekannten Maschinen Innenbohrungen oder Nuten bearbeitet. An den zu bearbeitenden Innenflächen werden die Räumwerkzeuge entweder vorbeigeschoben oder vorbeigezogen. Nachteilig ist bei diesen Maschinen in beiden Bearbeitungsmöglichkeiten die Tatsache, daß die Räumwerkzeuge während des Einsatzes nur einseitig eingespannt sind. Bei Druckräummaschinen wird die Belastungsgrenze durch die Knicksteifigkeit der relativ langen spindelartigen Räumwerkzeuge beschränkt. Bei Ziehbetrieb einer solchen Maschine wirkt sich die einseitige Festsetzung des langen Räumwerkzeuges im Ziehschlitten dadurch nachteilig aus, daß das andere Ende dieser Räumwerkzeuge zumindest geringfügig radial ausweichen kann und somit Ungenauigkeiten in der zu bearbeitenden Fläche entstehen können.

Die Aufgabe der Erfindung besteht darin, eine Innenräummaschine vorzuschlagen, mit der die Nachteile der bekannten Druck- und Ziehräummaschinen vermieden werden und mit welcher die Bearbeitung von Werkstücken mit hoher Genauigkeit bei hohen Antriebskräften und Arbeitsgeschwindigkeiten möglich ist.

Gelöst wird die Erfindungsaufgabe mit einer Innenräummaschine mit den Merkmalen des Anspruchs 1. Entscheidender Vorteil einer solchen erfindungsgemäßen Maschine ist die gleichzeitige Beaufschlagung des oder der Räumwerkzeuge mit Druck und Zug bei beidseitiger Einspannung des Räumwerkzeuges. Die Räumwerkzeuge sind während der Bearbeitung dabei exakt geführt. Durch die gleichzeitige Beaufschlagung der Räumwerkzeuge wird die Knickbelastung dieser Werkzeuge herabgesetzt, so daß diese Maschinen mit hohen Kräften bei hoher Arbeitsgenauigkeit und langen Standzeiten arbeiten können.

Als Werkzeughalter dienen vorzugsweise die im Anspruch 2 angegebenen Spannstöcke mit radial spannenden Zangen, wobei zusätzlich gemäß Anspruch 3 die Räumwerkzeuge im oberen Werkzeughalter in axialer Richtung abgestützt sind.

Mit den Merkmalen des Anspruchs 4 wird eine geeignete lösbare kraftschlüssige Kopplung des Druckschlittens mit dem Ziehschlitten angegeben, die auch die Lösung der Raumwerkzeuge nach Durchführung des Bearbeitungsvorganges in günstiger Weise ermöglichst.

Gemäß Anspruch 5 oder 6 kann der zugehörige Maschinentisch entweder ortsfest im Maschinengestell oder gegenläufig zur Arbeitsrichtung des Druckschlittens verfahrbar im Maschinengestell angeordnet sein. Die relative Verfahrbarkeit des Maschinentisches ermöglicht die Reduzierung der Bauhöhe insbesondere einer Senkrecht-Innenräummaschine.

Anhand eines prinzipiell abgebildeten Ausführungsbeispieles einer Senkrecht-Innenräummaschine wird die Erfindung im folgenden näher erläutert. Es zeigen:
- **Fig. 1:**: In einer teilweise geschnittenen Seitenansicht die Maschine mit drei parallel zueinander angeordneten Räumwerkzeugen in der Grundstellung vor Einfahren der Räumwerkzeuge in die zu bearbeitenden Werkstücke
- **Fig. 2:**: Eine Figur 1 entsprechende Arbeitsstellung, bei der die Räumwerkzeuge durch die zu bearbeitenden Werkstücke und den Maschinentisch hindurchgeführt und in den Werkzeughaltem des unteren Ziehschlittens radial eingespannt gehalten sind,
- **Fig. 3:**: Eine den vorangegangenen Figuren entsprechende Darstellung der Arbeitsstellung nach Beendigung des Räumvorganges,

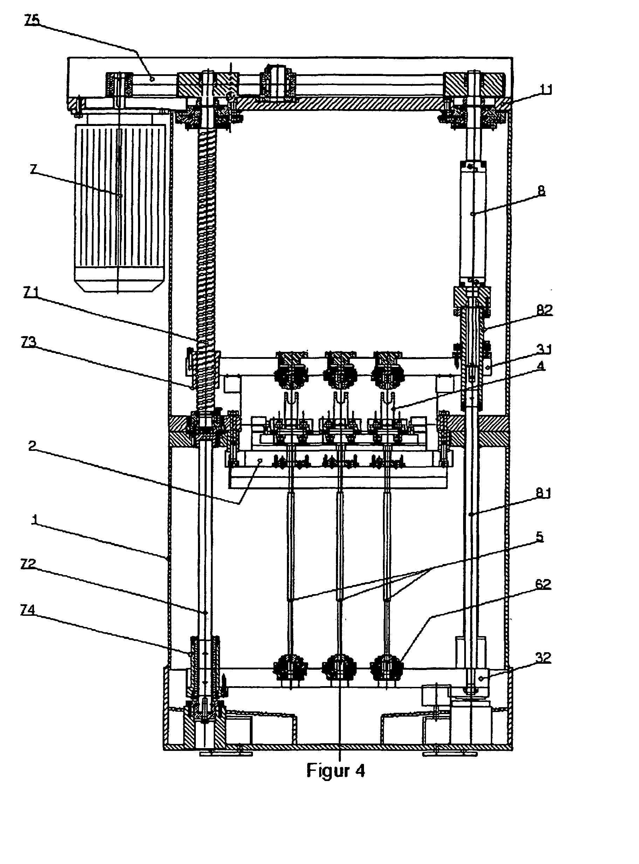

- **Fig. 4:**: Eine entsprechende Darstellung nach dem Verfahren des unteren Ziehschlittens in seine untere Stellung, in der die Räumwerkzeuge aus den bearbeiteten Werkstücken herausgefahren sind, und

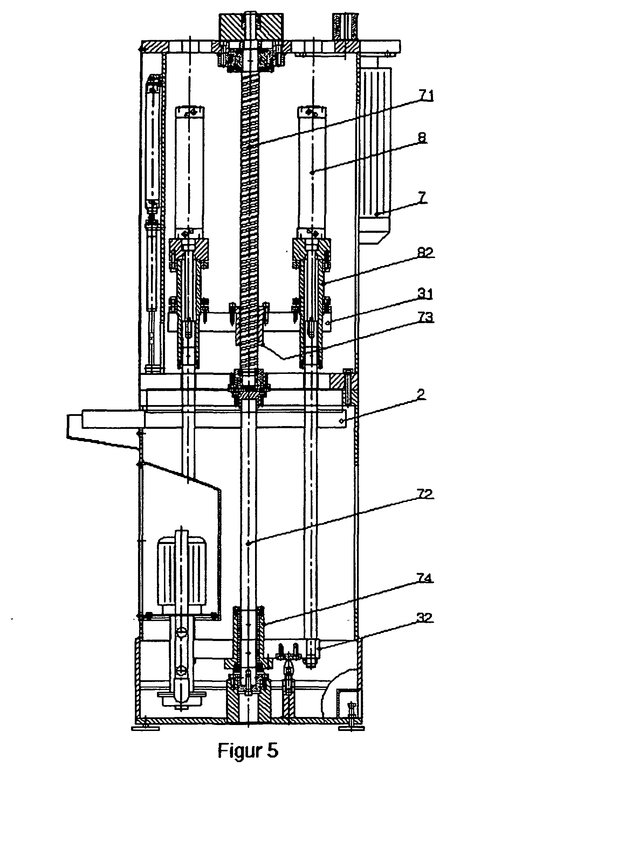

- **Fig. 5:**: Eine teilweise geschnittene Seitenansicht zur Darstellung in Figur 4.

Bei der dargestellten Senkrecht-Innenräummaschine ist in einem mit der Ziffer 1 bezeichneten Maschinengestell eine Räumschlitteneinheit vertikal verschiebbar angetrieben über den mit der Ziffer 7 bezeichneten Antriebsmotor, den Zahnriemenantrieb 75 und die Spindeln 71, wobei diese Räumschlitteneinheit aus dem oberen Druckschlitten 31 besteht, der mit den Muttern 73 als Kugelspindeltrieb geführt ist und dem unteren Ziehschlitten 32. Druckschlitten 31 und der beabstandete Ziehschlitten 32 sind lösbar kraftschlüssig miteinander koppelbar.

Zwischen den beiden Schlitten 31 und 32 ist ortsfest am Maschinengestell 1 ein Maschinentisch 2 angeordnet mit entsprechenden zentrierenden Aufnahmen für die zu bearbeitenden Werkstücke 4. In den Abbildungen sind diese Werkstücke 4 gabelartige Teile mit zu bearbeitenden Innenbohrungen.

Zur Reduzierung der Bauhöhe einer Senkrecht-Innenräummaschine kann ein solcher Arbeitstisch auch gegenläufig zur Arbeitsrichtung des Druckschlittens 31 verfahrbar angeordnet sein.

In der dargestellten Innenräummaschine stützen sich am ortsfesten Maschinentisch 2 die beiden Spindeln 71 in entsprechenden Lagern ab. Fluchtend zu diesen Spindeln 71 sind nach unten gerichtet an dem Maschinentisch 2 Führungsstangen 72 angeordnet, die sich unten im Maschinengestell 1 abstützen und auf denen der Ziehschlitten 32 mit Hülsen 74 geführt ist.

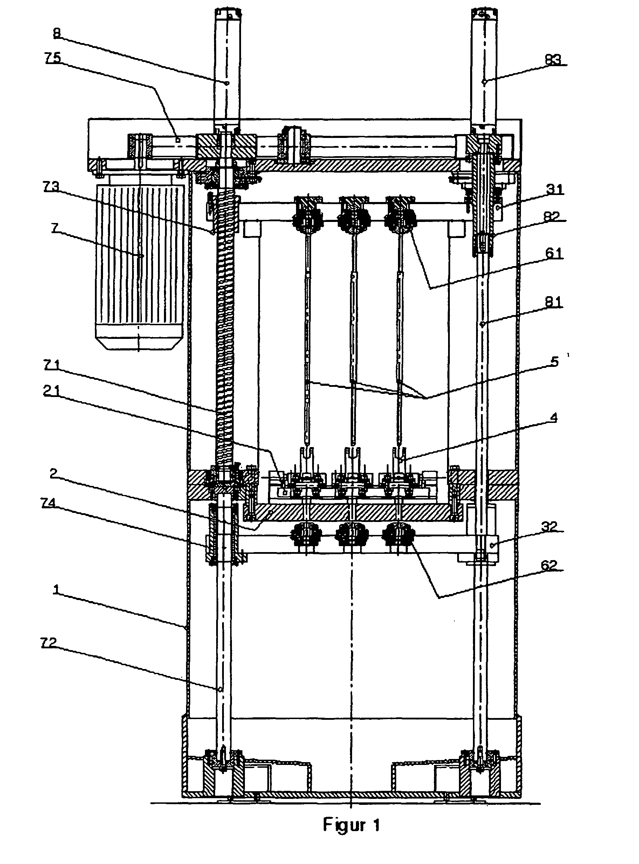

Vor Beginn der Bearbeitung sind, wie aus Figur 1 ersichtlich, die nadelartigen Räumwerkzeuge 5 am oberen Druckschlitten 31 in radial spannbaren Werkzeughaltern 61 gehalten und stützen sich in diesen Werkzeughaltern stimseitig ab. Die abgebildeten drei Räumwerkzeuge 5 sind dabei koaxial ausgerichtet zu den zu bearbeitenden Werkstücken 4 bzw. zu deren Aufnahmen oder Werkstückhaltem 21 am Maschinentisch 2.

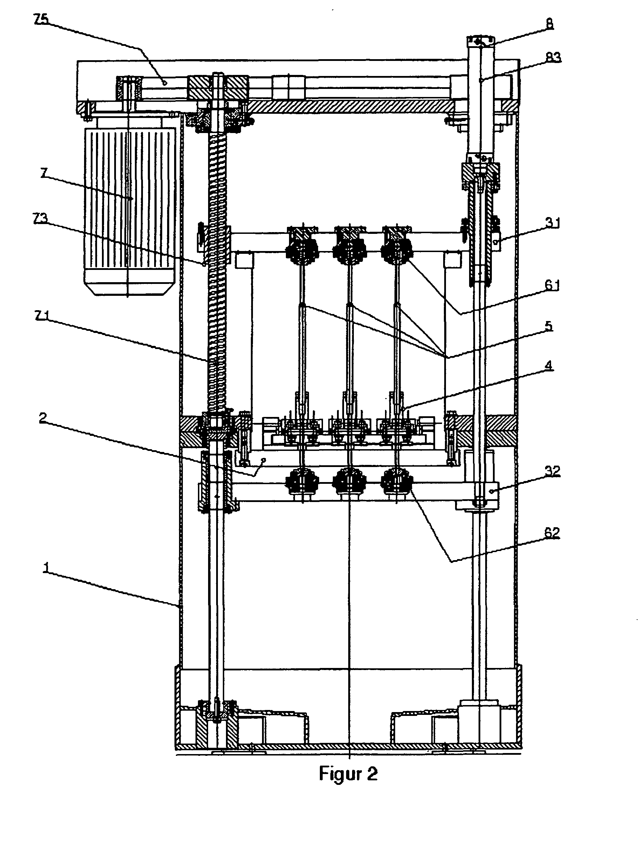

Wie aus Figur 2 ersichtlich, werden die Räumwerkzeuge 5 durch Verfahren des oberen Druckschlittens 31 in die zu bearbeitenden Werkstücke 4 eingefahren. Sie durchsetzen dann diese Werkstücke 4 und den Maschinentisch 2 und greifen in der entsprechenden Endstellung in die ebenfalls radial spannbaren Werkzeughalter 62 am unteren Ziehschlitten 32 ein. Sowohl am oberen Druckschlitten 31 als auch am unteren Ziehschlitten 32 sind als Werkzeughalter 61 bzw. 62 radial spannbare Zangen eines Spannstockes vorgesehen. In der Stellung gemäß Figur 2 ist der obere Druckschlitten 31 mit dem unteren Ziehschlitten 32 kraftschlüssig gekoppelt über die Elemente des mit der Ziffer 8 bezeichneten Hilfsantriebes. Dabei ist ein mit dem oberen Druckschlitten 31 fest verbundener Druckluftzylinder 82 mit aufgesetztem Druckluftspeicher 83 vorgesehen. Im Luftzylinder 82 ist angetrieben verschiebbar der zweiteilige Kolben, dessen unterer Teil 81, fest mit dem unteren Ziehschlitten 32 verbunden ist. Bei entsprechender Anordnung wird daher beim Verfahren des oberen Druckschlittens 31 nach unten auch der untere Ziehschlitten 32 nach unten verfahren und zieht dabei die eingespannt gehaltenen Räumwerkzeuge 5 nach unten, so daß durch diese Schlitteneinheit, bestehend aus oberem Schlitten 31 und unteren Ziehschlitten 32 sowohl eine Druck- als auch eine Zugbeanspruchung der Räumwerkzeuge 5 erfolgt.

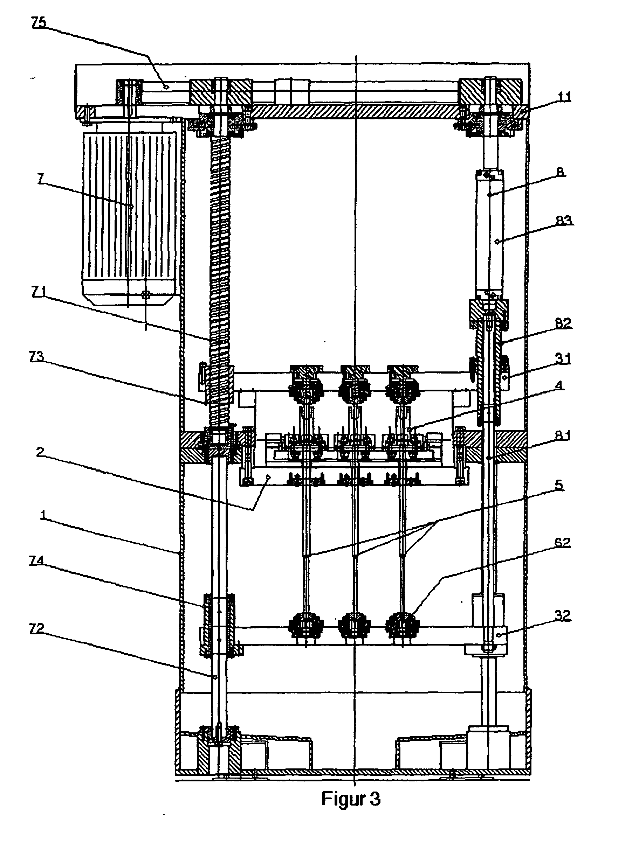

Nach vollständigem Durchfahren der Räumwerkzeuge 5 der bearbeiteten Werkstücke 4 erreichen die Schlitten 31 und 32 die in Figur 3 gezeigte Stellung.

Nach Erreichung dieser Stellung gemäß Figur 3 werden die oberen Werkzeughalter 61 gelöst und danach die Räumwerkzeuge 5 durch weiteres Verfahren des Ziehschlittens 32 nach unten über den Hilfsantrieb 8 aus den bearbeiteten Werkstücken herausgezogen, so daß diese in horizontaler Richtung herausgenommen werden können.

Zur Neueinrichtung der Maschine können dann in nicht dargestellter Weise die Schlitten und die Räumwerkzeuge wiederum in einer Ausgangsstellung gemäß Figur 1 zurückgefahren werden.

### Bezugszeichenliste

- 1: Maschinengestell
- 11: Kopfplatte

- 2: Maschinentisch
- 21: Werkstückhalter

- 31: Druckschlitten
- 32: Ziehschlitten

- 4: Werkstück

- 5: Räumwerkzeug

- 61: oberer Werkzeughalter
- 62: unterer Werkzeughalter

- 7: Antriebsmotor
- 71: Spindel
- 72: Führungsstange
- 73: Mutter
- 74: Hülse
- 75: Zahnriemenantrieb

- 8: Hilfsantrieb
- 81: unterer Kolbenteil
- 82: Zylinder
- 83: Druckluftspeicher

## Patentansprüche

1. Innenräummaschine, bei der in einem Maschinengestell (1) ein oberer Druckschlitten (31) und ein unterer Ziehschlitten (32) verfahrbar sind und zwischen diesen Schlitten (31, 32) ein Maschinentisch (2) mit Aufnahmen für das oder die parallel zu bearbeitenden Werkstücke (4) angeordnet ist, wobei das oder die den Maschinentisch (2) durchsetzenden Räumwerkzeuge (5) jeweils am Druckschlitten (31) und am Ziehschlitten (32) in Werkzeughaltern (61, 62) festsetzbar sind, **dadurch gekennzeichnet, dass** zur gleichzeitigen Druck- und Zugbeanspruchung während des Räumens das oder die Räumwerkzeuge (5) in radial spannbaren Werkzeughaltern 62) am Druck- (31) und am Ziehschlitten (32) zentriert eingespannt gehalten sind, wobei die beiden Schlitten (31, 32) während der Räumbearbeitung kraftschlüssig gekoppelt sind.

2. Räummaschinen nach Anspruch 1, **dadurch gekennzeichnet, dass** die Werkzeughalter (61, 62) Spannstöcke mit radial spannenden Zangen sind.

3. Räummaschine nach Anspruch 1, **dadurch gekennzeichnet, dass** die Räumwerkzeuge (5) im oberen Werkzeughalter 861) zusätzlich in axialer Richtung abgestützt gehalten sind.

4. Räummaschine nach Anspruch 1, **dadurch gekennzeichnet, dass** der untere Ziehschlitten (32) über Hilfsantriebe (8) relativ zum Druckschlitten (31) nach Lösen der Räumwerkzeuge (5) aus den unteren Werkzeughaltern (62) verfahrbar ist.

5. Räummaschine nach Anspruch 1, **dadurch gekennzeichnet, dass** der Maschinentisch (2) ortsfest im Maschinengestell (1) angeordnet ist.

6. Räummaschine nach Anspruch 1, **dadurch gekennzeichnet, dass** der Maschinentisch gegenläufig zur Arbeitsrichtung des Druckschlittens verfahrbar ist.

7. Räummaschine nach Anspruch 1, **dadurch gekennzeichnet, dass** der Räumschlitten (31) auf mehreren seitlich senkrecht angeordneten Spindeltrieben verfahrbar ist, deren Spindeln (71) über einen gemeinsamen Antrieb (7, 75) angetrieben sind.

8. Räummaschine nach einem oder mehreren der vorangegangenen Ansprüche, **dadurch gekennzeichnet, dass** der Hilfsantrieb (8) aus einem fest mit dem oberen Druckschlitten (31) verbundenen Luftzylinder (82) mit aufgesetztem Druckluftspeicher (83) und einem im Luftzylinder (82) verschiebbaren zweiteiligen Kolben besteht, dessen unterer Teil (81) fest mit dem unteren Ziehschlitten (32) verbunden ist.

## Claims

1. Internal-broaching machine, in which an upper pressure carriage (31) and a lower drawing carriage (31, 32) are displaceable in a machine frame (1), and between these carriages (31, 32) is disposed a machine table (2) having receiving means for the workpiece or workpieces (4) to be machined in parallel, the broaching tool or tools (5) which extend through the machine table (2) being capable of being fixed respectively to the pressure carriage (31) and to the drawing carriage (32) in tool holders (61, 62), **characterised in that**, for simultaneous compressive stress and tensile load during the broaching work, the broaching tool or tools (5) are held clamped centred in radially tensible tool holders (61, 62) on the pressure carriage (31) and on the drawing carriage (32), the two carriages (31,32) being coupled in a force-locking manner during the broaching work.

2. Broaching machine according to claim 1, **characterised in that** the tool holders (61, 62) are vices with radially clamping jaws.

3. Broaching machine according to claim 1, **characterised in that** the broaching tools (5) in the upper tool holder (61) are held additionally supported in an axial direction.

4. Broaching machine according to claim 1, **characterised in that** the lower drawing carriage (32) is displaceable via auxiliary drives (8) relative to the pressure carriage (31) after the broaching tools (5) have been released from the lower tool holders (62).

5. Broaching machine according to claim 1, **characterised in that** the machine table (2) is disposed in the machine frame (1) in a stationary manner.

6. Broaching machine according to claim 1, **characterised in that** the machine table is displaceable in an opposite direction to the working direction of the pressure carriage.

7. Broaching machine according to claim 1, **characterised in that** the broaching carriage (31) is displaceable on a plurality of spindle drives which are arranged vertically at the side, the spindles (71) of these drives being driven by a common drive (7, 75).

8. Broaching machine according to one or more of the preceding claims, **characterised in that** the auxiliary drive (8) comprises an air cylinder (82), which is securely connected to the upper pressure carriage (31) and has a compressed-air reservoir (83) mounted on it, and a two-part piston which is displaceable in the air cylinder (82) and the lower portion (81) of which is securely connected to the lower drawing carriage (32).

## Revendications

1. Machine à brocher l'intérieur, pour laquelle un chariot supérieur de pression (31) et un chariot inférieur de traction (32) sont placés de manière mobile dans un châssis de machine (1) et sachant qu'entre ces chariots (31, 32) est placée une table (2) avec des logements pour la ou les pièces (4) faisant l'objet d'un usinage parallèle , sachant que le ou les outils de brochage (5) traversant la table (2) peuvent être fixés sur des porte-outils (61, 62) soit sur le chariot de pression (31), soit sur le chariot de traction (32) **caractérisée en ce que** le ou les outils de brochage (5) sont, afin que la pression et la traction se fassent en même temps pendant le brochage, maintenus de manière centrée dans des porte-outils (61, 62) à serrage radial sur le chariot de pression (31) et sur le chariot de traction (32), sachant que les deux chariots (31, 32) sont couplés par force pendant la réalisation du brochage.

2. Machine à brocher selon la revendication 1 **caractérisée en ce que** les porte-outils (61, 62) sont des blocs de serrage avec des pinces à serrage radial.

3. Machine à brocher selon la revendication 1 **caractérisée en ce que** les outils de brochage (5) sont maintenus dans le porte-outil supérieur (861) tout en étant de surcroît en appui dans le sens axial.

4. Machine à brocher selon la revendication 1 **caractérisée en ce que** le chariot de traction inférieur (32) peuvent, par le biais de commandes auxiliaires (8) coulisser de manière relative par rapport au chariot de pression (31) après desserrage des outils de brochage (5) dans les porte-outils inférieurs (62).

5. Machine à brocher selon la revendication 1 **caractérisée en ce que** la table (2) est disposée de manière fixe sur le châssis de machine (1 )

6. Machine à brocher selon la revendication 1 **caractérisée en ce que** la table peut être déplacée dans le sens contraire au sens de travail du chariot de pression.

7. Machine à brocher selon la revendication 1 **caractérisée en ce que** les chariots à brocher (31) peuvent être déplacés sur plusieurs moteurs à broches disposés verticalement sur les côtés, dont les broches (71) sont entraînées par le biais d'un entraînement commun (7, 75).

8. Machine à brocher selon une ou plusieurs des revendications précédentes **caractérisée en ce que** la commande auxiliaire (8) est constituée d'un cylindre à air (82) surmonté d'un réservoir à air comprimé (83) et d'un piston en deux parties qui peut être déplacé dans le cylindre à air (82), dont la partie inférieure (81) est fermement liée avec le chariot de traction inférieur (32).
